# EUROPEAN PATENT APPLICATION

(11) **EP 1 628 091 A2**
(43) Date of publication of application: **22.02.2006**
(21) Application number: 05001039.6
(22) Date of filing: 19.01.2005
(51) Int. Cl.: F25B 27/00

(54) **Air conditioning system combined with an electricity generating system**

(30) Priority: 17.08.2004 KR 2004064811
(71) Applicant: LG ELECTRONICS INC., Seoul 150-010 (KR)
(72) Inventor: Kim, Cheol Min, Manan-ku Anyang-si Kyungki-do 430-042 (KR); Ko, Cheol Soo, Kyungki-do 435-040 (KR); Ha, Sim Bok, Seoul 153-023 (KR); Chung, Baik Young, jong-do Kyeyang-ku Inchun-si 407-710 (KR)
(74) Representative: TER MEER - STEINMEISTER & PARTNER GbR

(57) **Abstract**

A cogeneration system including an engine (50), which drives a generator (52) to generate electricity, a cooling/heating unit (60), which comprises at least one compressor (61), a four-way valve (62), an outdoor heat exchanger (63), an expansion device (64), and an indoor heat exchanger (65), to establish a heat pump type refrigerant cycle, a pre-heat supplier to supply heat of cooling water used to cool the engine (50) and heat of exhaust gas discharged from the engine (50) to the outdoor heat exchanger (63), and thus, to pre-heat air passing around the outdoor heat exchanger (63), and a refrigerant over-heater to supply the heat of the exhaust gas discharged from the engine (50) to an inlet of the indoor heat exchanger (65) of the cooling/heating unit (60). In accordance with the cogeneration system, it is possible to maximize engine waste heat utilization, and thus, to achieve an enhancement in heating performance.

## Description

### BACKGROUND OF THE INVENTION

### Field of the Invention

The present invention relates to a cogeneration system in which both the electricity and waste heat generated from an engine are used, and, more particularly, to a cogeneration system in which waste heat generated from an engine is supplied to an outdoor heat exchanger and an indoor heat exchanger to achieve an enhancement in heating performance.

### Description of the Related Art

In general, cogeneration systems are adapted to generate both electricity and heat from a single energy source.

Such a cogeneration system can recover heat of exhaust gas or waste heat of cooling water generated from an engine or turbine during an electricity generation operation, so that the cogeneration system can achieve an increase in energy efficiency of 70 to 80% over other systems. By virtue of such an advantage, the cogeneration system has recently been highlighted as an electricity and heat supply source for buildings. In particular, the cogeneration system exhibits highly-efficient energy utilization in that the recovered waste heat is mainly used to heat/cool a confined space and to heat water.

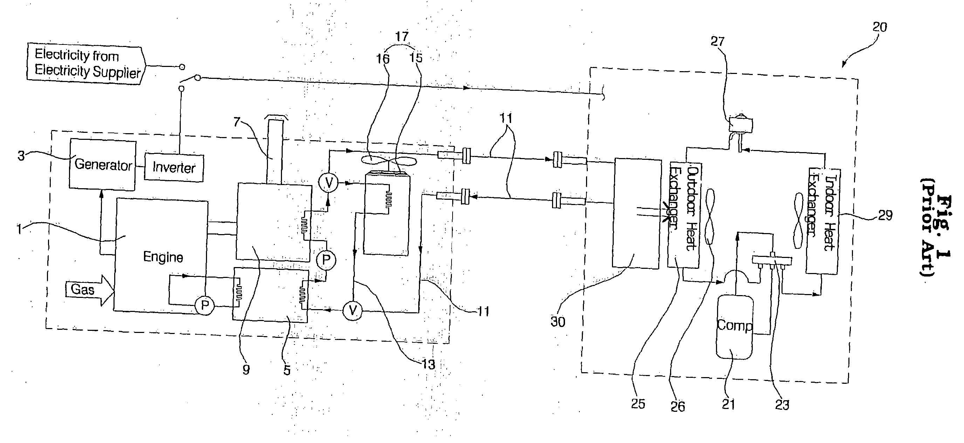

FIG. 1 is a schematic configuration diagram illustrating a conventional cogeneration system used in a heating/cooling apparatus.

As shown in FIG. 1, the conventional cogeneration system includes a gas engine 1, and a generator 3, which is driven by a driving force outputted from the gas engine 1, to generate electricity. The electricity generated from the generator 3 is used in a variety of devices including a cooling/heating unit 20, illumination devices, and other electrical products.

In the cogeneration system, waste heat generated from the gas engine 1, that is, heat of cooling water generated when the cooling water cools the gas engine 1, and heat of exhaust gas generated from the gas engine 1, is used during a heating operation of the cooling/heating unit 20.

Here, the cooling/heating unit 20 is of a heat pump type so that the cooling/heating unit 20 not only can be used as a cooling unit, but also can be used as a heating unit in a state in which the refrigerant flow direction in the refrigerant cycle is reversed. As in a general heat pump type configuration, the cooling/heating unit 20 includes a compressor 21, a four-way valve 23, an outdoor heat exchanger 25, an outdoor fan 26, an expansion device 27, and an indoor heat exchanger 29.

In particular, an air pre-heating heat exchanger 30 is arranged at the side of the outdoor heat exchanger 25 to preheat air passing around the outdoor heat exchanger 25 during a heating operation of the cooling/heating unit 20, using the waste heat of the gas engine 1.

In order to supply the waste heat to the cooling/heating unit 20, the cogeneration system also includes a cooling water heat exchanger 5 to recover the heat of the cooling water used to cool the gas engine 1, and an exhaust gas heat exchanger 9 arranged at an exhaust conduit 7 to recover the heat of the exhaust gas.

The cooling water heat exchanger 5 and exhaust gas heat exchanger 9 are connected to the air pre-heating heat exchanger 30 of the cooling/heating unit 20 by a heat transfer line 11, through which a heat transfer medium flows, so as to supply waste heat to the air pre-heating heat exchanger 30 during the heating operation of the cooling/heating unit 20. Thus, the cogeneration system recovers engine heat and exhaust gas heat, pre-heats outdoor air through the air pre-heating heat exchanger 30, using the recovered heat, and causes the pre-heated air to perform heat exchange with the outdoor heat exchanger 25, thereby preventing a degradation in the heating performance of the cooling/heating unit 20, which may occur when the temperature of the outdoor air is low.

When the cooling/heating unit 20 operates in a cooling mode, the flow path of the heat transfer medium is changed to communicate with a radiating line 13, which is connected to the heat transfer line 11, because it is unnecessary to supply waste heat. In this case, the waste heat is discharged to the atmosphere through a radiator 17, which includes a heat exchanger 15 and a radiator fan 16, or is supplied to and used in a water heater, a hot water supplier, or other systems.

In FIG. 1, reference character P designates pumps, each serving to force the heat transfer medium to flow through an associated portion of the heat transfer line 11, and reference character V designates valves, each serving to switch the flow path of the heat transfer medium between the heat transfer line 11 and the radiating line 13.

However, since the waste heat generated from the gas engine 1 is used only to pre-heat the outdoor heat exchanger 25 through the air pre-heating heat exchanger 30, the conventional cogeneration system has a limitation in enhancing the heating performance during the heating operation.

### SUMMARY OF THE INVENTION

The present invention has been made in view of the above-mentioned problem, and it is an object of the invention to provide a cogeneration system in which cooling water heat and primary exhaust gas heat of an engine are used to pre-heat an outdoor heat exchanger during a heating operation, and secondary exhaust gas heat of the engine is used to heat a refrigerant entering an indoor heat exchanger, thereby achieving an enhancement in heating performance.

In accordance with one aspect, the present invention provides a cogeneration system comprising: an engine, which drives a generator to generate electricity; a cooling/heating unit, which comprises at least one compressor, a four-way valve, an outdoor heat exchanger, an expansion device, and an indoor heat exchanger, to establish a heat pump type refrigerant cycle; pre-heat supplying means to supply heat of cooling water used to cool the engine and heat of exhaust gas discharged from the engine to the outdoor heat exchanger, and thus, to pre-heat air passing around the outdoor heat exchanger; and refrigerant over-heating means to supply the heat of the exhaust gas discharged from the engine to an inlet of the indoor heat exchanger of the cooling/heating unit.

The pre-heat supplying means may comprise a first exhaust gas heat exchanger to recover heat of a relatively high temperature from the exhaust gas of the engine. The refrigerant over-heating means may comprise a second exhaust gas heat exchanger to recover heat of a relatively low temperature from the exhaust gas of the engine. The first and second exhaust gas heat exchangers may be arranged at an exhaust conduit, through which the exhaust gas of the engine is discharged.

The pre-heat supplying means may comprise a cooling water heat exchanger to recover the cooling water heat of the engine, a first exhaust gas heat exchanger to recover the exhaust gas heat discharged from the engine, a pre-heating heat exchanger to pre-heat the outdoor heat exchanger, and a heat transfer line, which connects the cooling water heat exchanger, the first exhaust gas heat exchanger, and the pre-heating heat exchanger, to guide a heat transfer medium to pass through the cooling water heat exchanger, the first exhaust gas heat exchanger, and the pre-heating heat exchanger.

A temperature sensor may be arranged at the heat transfer line to sense a temperature of the heat transfer medium.

The cogeneration system may further comprise radiating means arranged at the heat transfer line to radiate heat transferred from the cooling water heat exchanger and the first exhaust gas heat exchanger. The radiating means may comprise a radiating line branched from the heat transfer line, a valve to change a fluid path between the heat transfer line and the radiating line, and a radiating heat exchanger, through which the radiating line extends to radiate heat.

The cogeneration system may further comprise an external heat exchanger connected to the heat transfer line to receive heat transferred from the cooling water heat exchanger and the first exhaust gas heat exchanger, and thus, to supply a heat source to an external system.

The refrigerant over-heating means may comprise a heating line branched from a refrigerant line between the indoor heat exchanger and the four-way valve, a valve to change a refrigerant path between the refrigerant line and the heating line, and a second exhaust gas heat exchanger arranged at an exhaust conduit of the engine. The heating line may extend through the second exhaust gas heat exchanger, and may perform heat exchange with the second exhaust gas heat exchanger.

A flow rate control valve may be arranged at the heating line to control a flow rate of the refrigerant passing through the heating line.

In accordance with another aspect, the present invention provides a cogeneration system comprising: an engine, which drives a generator to generate electricity; a cooling/heating unit, which comprises at least one compressor, a four-way valve, an outdoor heat exchanger, an expansion device, and an indoor heat exchanger, to establish a heat pump type refrigerant cycle; pre-heat supplying means to supply heat of cooling water used to cool the engine and heat of exhaust gas discharged from the engine to the outdoor heat exchanger, and thus, to pre-heat air passing around the outdoor heat exchanger, the pre-heat supplying means comprising a cooling water heat exchanger to recover the cooling water heat of the engine, a first exhaust gas heat exchanger to recover the exhaust gas heat discharged from the engine, a pre-heating heat exchanger to pre-heat the outdoor heat exchanger, and a heat transfer line, which connects the cooling water heat exchanger, the first exhaust gas heat exchanger, and the pre-heating heat exchanger, to guide a heat transfer medium to pass through the cooling water heat exchanger, the first exhaust gas heat exchanger, and the pre-heating heat exchanger; and refrigerant over-heating means to supply the heat of the exhaust gas discharged from the engine to an inlet of the indoor heat exchanger of the cooling/heating unit, the refrigerant over-heating means comprising a heating line branched from a refrigerant line between the indoor heat exchanger and the four-way valve, a valve to change a refrigerant path between the refrigerant line and the heating line, and a second exhaust gas heat exchanger arranged at an exhaust conduit of the engine, the heating line extending through the second exhaust gas heat exchanger and performing heat exchange with the second exhaust gas heat exchanger.

In accordance with another aspect, the present invention provides a cogeneration system comprising: an engine, which drives a generator to generate electricity; a cooling/heating unit, which comprises at least one compressor, a four-way valve, an outdoor heat exchanger, an expansion device, and an indoor heat exchanger, to establish a heat pump type refrigerant cycle; pre-heat supplying means to recover exhaust gas heat of a relatively high temperature discharged from the engine through a first exhaust gas heat exchanger, and thus, to pre-heat air passing around the outdoor heat exchanger; and refrigerant over-heating means to recover exhaust gas heat of a relatively low temperature discharged from the engine through a second exhaust gas heat exchanger and to supply the recovered exhaust gas heat to an inlet of the indoor heat exchanger of the cooling/heating unit.

In the cogeneration system of the present invention, cooling water heat and primary exhaust gas heat of the engine are used to pre-heat the outdoor heat exchanger during the heating operation, and secondary exhaust gas heat of the engine is used to heat the refrigerant entering the indoor heat exchanger. According, it is possible to maximize engine waste heat utilization, and thus, to achieve an enhancement in heating performance.

### BRIEF DESCRIPTION OF THE DRAWINGS

The above objects, and other features and advantages of the present invention will become more apparent after reading the following detailed description when taken in conjunction with the drawings, in which:
FIG. 1 is a schematic configuration diagram illustrating a conventional cogeneration system;
FIG. 2 is a schematic configuration diagram illustrating a cogeneration system according to an exemplary embodiment of the present invention; and
FIG. 3 is a schematic configuration diagram illustrating a cogeneration system according to another exemplary embodiment of the present invention in which a plurality of cooling/heating units are used.

### DESCRIPTION OF THE PREFERRED EMBODIMENTS

Hereinafter, exemplary embodiments of a cogeneration system according to the present invention will be described with reference to the annexed drawings.

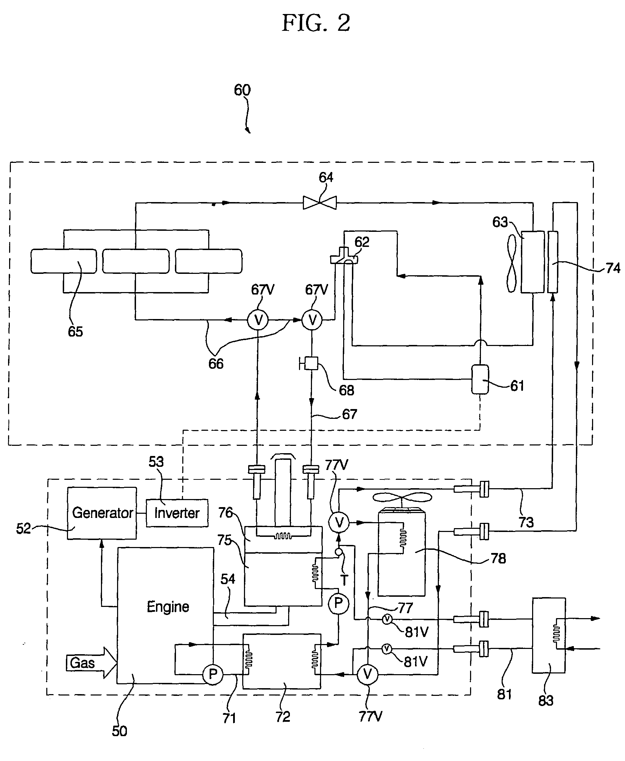

FIG. 2 is a schematic configuration diagram illustrating a cogeneration system according to an exemplary embodiment of the present invention.

As shown in FIG. 2, the cogeneration system includes an engine 50, which operates using fossil fuel such as natural gas or petroleum gas, a generator 52 and an inverter 53 to generate electricity, using a driving force of the engine 50, first and second exhaust gas heat exchangers 75 and 76 arranged at an exhaust conduit 54 to recover heat of exhaust gas of the engine 50, a cooling water heat exchanger 72 to recover heat of cooling water of the engine 50, and a radiating heat exchanger 78 to radiate the cooling water heat.

The cogeneration system also includes a cooling/heating unit 60, which uses a heat pump type refrigerant cycle using waste heat generated from the engine 50. The cooling/heating unit 60 includes at least one compressor 61, a four-way valve 62, an outdoor heat exchanger 63, an expansion device 64, and an indoor heat exchanger 65, as in a general heat pump type cooling/heating unit, which can be used as both a cooling unit and a heating unit in accordance with reversal of a refrigerant flow in a refrigerant cycle of the cooling/heating unit.

Fans (not shown), which are provided in association with the compressor 61, outdoor heat exchanger 63, and indoor heat exchanger 65, respectively, may be driven by the electricity supplied from the generator 52.

As described above, the first and second exhaust gas heat exchangers 75 and 76 are arranged at the exhaust conduit 54, through which exhaust gas of the engine 50 is discharged. The first exhaust gas heat exchanger 75 is arranged upstream from the second exhaust gas heat exchanger 76 with respect to a flowing direction of the exhaust gas, to recover heat of a relatively high temperature. In this case, the second exhaust gas heat exchanger 76, which is arranged downstream from the first exhaust gas heat exchanger 75, recovers heat of a relative low temperature.

It is preferred that the exhaust gas heat exchangers 75 and 76 be designed to withstand an exhaust gas pressure of 600 mmAq or below. Also, the first exhaust gas heat exchanger 75 must be designed such that the outlet exhaust gas temperature thereof ranges from 130°C to 150°C. In this case, the second exhaust gas heat exchanger 76 can effectively perform heat exchange with a refrigerant passing through the second exhaust gas heat exchanger 76, and thus, can discharge exhaust gas maintained at a temperature of 100°C or below.

The cogeneration system also includes a pre-heat supplying means to supply the heat of cooling water used to cool the engine 50 and the heat of exhaust gas discharged from the engine 50 to the outdoor heat exchanger 63, and thus, to pre-heat air passing around the outdoor heat exchanger 63. The cooling water heat exchanger 72 is included in the pre-heat supplying means. The cooling water heat exchanger 72 is connected to the engine 50 via a cooling water line '71 to recover the cooling water heat of the engine 50. The first exhaust gas heat exchanger 75, which primarily recovers the heat of the exhaust gas discharged from the engine 50, is also included in the pre-heat supplying means. The pre-heat supplying means further includes a pre-heating heat exchanger 74 to pre-heat the outdoor heat exchanger 63, and a heat transfer line 73, which connects the cooling water heat exchanger 72, first exhaust gas heat exchanger 75, and pre-heating heat exchanger 74, to guide a heat transfer medium to pass through the exchangers 72, 75, and 74.

A temperature sensor T is arranged at the heat transfer line 73 to sense the temperature of the heat transfer medium at an outlet of the first exhaust gas heat exchanger 75.

A radiating means is also arranged at the heat transfer line 73 to radiate heat transferred from the cooling water heat exchanger 72 and first exhaust gas heat exchanger 75. The radiating means includes a radiating line 77 branched from the heat transfer line 73, valves 77v to change a fluid path between the heat transfer line 73 and the radiating line 77, and a radiating heat exchanger 78, through which the radiating line 77 extends to radiate heat.

An external heat exchanger 83 is connected to the heat transfer line 73 via an external line 81 to receive the heat transferred from the cooling water heat exchanger 72 and first exhaust gas heat exchanger 75, and thus, to supply a heat source to an external system for hot water supply or other purposes.

In accordance with the present invention, the cogeneration system further includes a refrigerant over-heating means to supply the heat of the exhaust gas discharged from the engine 50 to an inlet of the indoor heat exchanger 65 of the cooling/heating unit 60. The refrigerant over-heating means includes a heating line 67 branched from a refrigerant line 66 between the indoor heat exchanger 65 and the four-way valve 62, and valves 67v to change a refrigerant path between the refrigerant line 66 and the heating line 67. The refrigerant over-heating means also includes the second exhaust gas heat exchanger 76, which is arranged at the exhaust conduit 54 of the engine 50. The heating line 67 extends through the second exhaust gas heat exchanger 76, and performs heat exchange with the second exhaust gas heat exchanger 76.

A flow rate control valve 68 is arranged at the heating line 67 to control the flow rate of the refrigerant flowing through the second exhaust gas heat exchanger 76.

In FIG. 2, reference character P designates pumps, each serving to force the heat transfer medium to flow through an associated line.

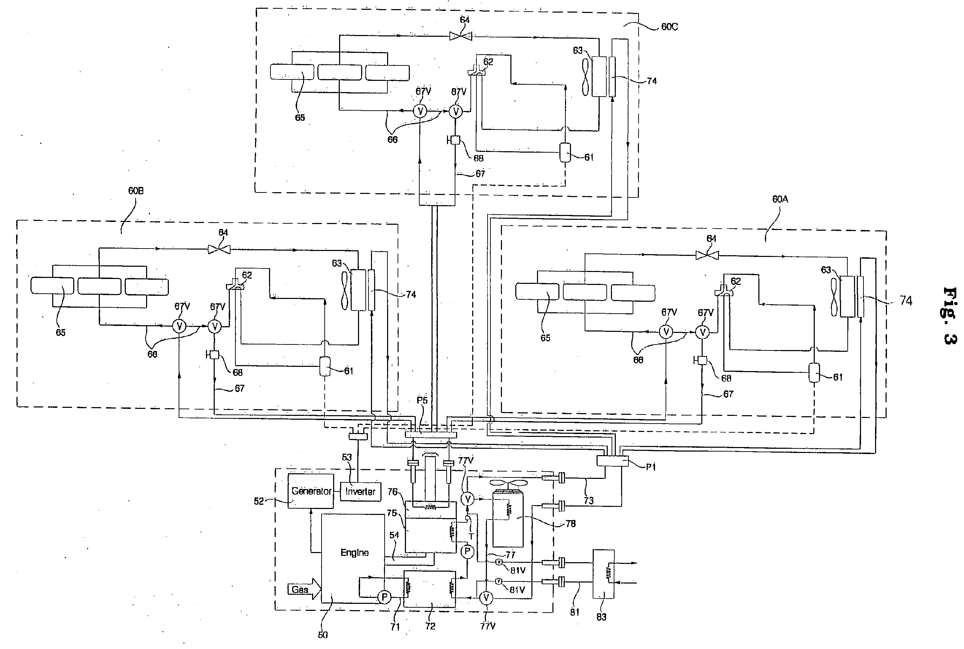

Although the arrangement, in which a plurality of indoor heat exchangers 65 are connected to the single compressor 61, has been illustrated in FIG. 2, a plurality of compressors 61 or a plurality of outdoor heat exchangers 63 may be used. Also, although the cogeneration system has been illustrated as including one engine 50 and one cooling/heat unit 60, a plurality of cooling/heating units 60A, 60B, and 60C or a plurality of engine rooms may be used, as shown in FIG. 3.

Of course, where a plurality of cooling/heating units or a plurality of engine rooms are used, they are connected in serial or in parallel to the refrigerant line or heat transfer line through distributors 91 and 95.

Meanwhile, the above-described heat exchangers may have various heat transfer configurations, for example, a heat transfer configuration in which heat transfer is carried out through a thermal conductor, or a heat transfer configuration in which heat transfer is carried out through a fluid present in a heat exchanger, in accordance with the given design condition or the given requirement.

Hereinafter, operation of the cogeneration system according to the present invention will be described.

Electricity, which is generated by a driving force from the engine 50, may be used to operate electricity consuming elements such as the compressor 61 of the cooling/heating unit 60 and diverse controllers.

During a heating operation of the cooling/heating unit 60, a refrigerant flows through the compressor 61, four-way valve 62, indoor heat exchanger 65, expansion device 64, and outdoor heat exchanger 63, in this order, to perform a heating operation. In this case, the cooling water heat and exhaust gas heat of the engine 50 are transferred to the pre-heating heat exchanger 74 via the cooling water heat exchanger 72 and first exhaust gas heat exchanger 75, so that the outdoor heat exchanger 63 is pre-heated. Accordingly, it is possible to prevent the heat exchanging performance of the outdoor heat exchanger 63 serving as an evaporator from being greatly degraded under the condition in which the ambient temperature is considerably low. Thus, an enhancement in heating performance is achieved.

Also, the refrigerant, which is introduced into the indoor heat exchanger 65 via the second exhaust gas heat exchanger 76, is heated by the secondary exhaust gas heat. Accordingly, it is possible to enhance the heating performance of the indoor heat exchanger 65 serving as a condenser to heat a confined space.

When a heating overload is generated, or the load to be heated is small, the flow rate of the refrigerant is appropriately controlled, using the valves 67v and flow rate control valve 68. Also, the temperature of the heat transfer medium transferred to the pre-heating heat exchanger 74 is appropriately controlled by sensing the temperature of the heat transfer medium by the temperature sensor T, and changing the communication paths of the valves 77v and valves 81v respectively associated with the radiating heat exchanger 78 and external heat exchanger 83, based on the sensed temperature.

Meanwhile, when heating of water is required, the valves 81v, which are arranged at the external line 81, are opened to transfer heat to the external heat exchanger 83 via the external line 81, and thus, to enable the external heat exchanger 83 to heat water.

In a cooling operation of the cooling/heating unit 60, the refrigerant flows through the compressor 61, four-way valve 62, outdoor heat exchanger 63, expansion device 64, indoor heat exchanger 65, four-way valve 62, and compressor 61, in this order, to perform the cooling operation.

In this case, the heat transferred from the cooling water heat exchanger 72 and first exhaust gas heat exchanger 75 to the pre-heating heat exchanger 74 is cut off. Also, the engine cooling water heat and exhaust gas heat are radiated through the radiating heat exchanger 78 and external heat exchanger 83. The communication paths of the valves 67v are also changed to prevent the refrigerant from flowing from the refrigerant line 66 between the indoor heat exchanger 65 and the four-way valve 62 to the bypass line 67 communicating with the second exhaust gas heat exchanger 76.

As apparent from the above description, in the cogeneration system of the present invention, cooling water heat and primary exhaust gas heat of the engine are used to pre-heat the outdoor heat exchanger during the heating operation, and secondary exhaust gas heat of the engine is used to heat the refrigerant entering the indoor heat exchanger. According, it is possible to maximize engine waste heat utilization, and thus, to achieve an enhancement in heating performance.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A cogeneration system comprising:
an engine (50), which drives a generator (52) to generate electricity;
a cooling/heating unit (60), which comprises at least one compressor (61), a four-way valve (62), an outdoor heat exchanger (63), an expansion device (64), and an indoor heat exchanger (65), to establish a heat pump type refrigerant cycle;
pre-heat supplying means to supply heat of cooling water used to cool the engine (50) and heat of exhaust gas discharged from the engine (50) to the outdoor heat exchanger (63), and thus, to pre-heat air passing around the outdoor heat exchanger (63); and
refrigerant over-heating means to supply the heat of the exhaust gas discharged from the engine (50) to an inlet of the indoor heat exchanger (65) of the cooling/heating unit (60).

2. The cogeneration system according to claim 1, wherein:
the pre-heat supplying means comprises a first exhaust gas heat exchanger (75) to recover heat of a relatively high temperature from the exhaust gas of the engine (50);
the refrigerant over-heating means comprises a second exhaust gas heat exchanger (76) to recover heat of a relatively low temperature from the exhaust gas of the engine (50); and
the first and second exhaust gas heat exchangers (75), (76) are arranged at an exhaust conduit (54), through which the exhaust gas of the engine (50) is discharged.

3. The cogeneration system according to claim 1, wherein the pre-heat supplying means comprises:
a cooling water heat exchanger (72) to recover the cooling water heat of the engine (50);
a first exhaust gas heat exchanger (75) to recover the exhaust gas heat discharged from the engine (50);
a pre-heating heat exchanger (74) to pre-heat the outdoor heat exchanger (63); and
a heat transfer line (73), which connects the cooling water heat exchanger (72), the first exhaust gas heat exchanger (75), and the pre-heating heat exchanger (74), to guide a heat transfer medium to pass through the exchangers (72), (75), (74).

4. The cogeneration system according to claim 3, wherein a temperature sensor (T) is arranged at the heat transfer line (73) to sense a temperature of the heat transfer medium.

5. The cogeneration system according to claim 3, further comprising:
radiating means (77, 78) arranged at the heat transfer line (73) to radiate heat transferred from the cooling water heat exchanger (72) and the first exhaust gas heat exchanger (75).

6. The cogeneration system according to claim 5, wherein the radiating means (77, 78) comprises:
a radiating line (77) branched from the heat transfer line (73);
a valve to change a fluid path between the heat transfer line (73) and the radiating line (77); and
a radiating heat exchanger (78), through which the radiating line (77) extends to radiate heat.

7. The cogeneration system according to claim 3, further comprising:
an external heat exchanger (83) connected to the heat transfer line (73) to receive heat transferred from the cooling water heat exchanger (72) and the first exhaust gas heat exchanger (75), and thus, to supply a heat source to an external system.

8. The cogeneration system according to claim 1, wherein the refrigerant over-heating means comprises:
a heating line (67) branched from a refrigerant line (66) between the indoor heat exchanger (65) and the four-way valve (62);
a valve (67v) to change a refrigerant path between the refrigerant line (66) and the heating line (67); and
a second exhaust gas heat exchanger (76) arranged at an exhaust conduit (54) of the engine (50),
wherein the heating line (67) extends through the second exhaust gas heat exchanger (76), and performs heat exchange with the second exhaust gas heat exchanger (76).

9. The cogeneration system according to claim 8, wherein a flow rate control valve (68) is arranged at the heating line (67) to control a flow rate of the refrigerant passing through the heating line (67).

10. A cogeneration system comprising:
an engine (50), which drives a generator (52) to generate electricity;
a cooling/heating unit (60), which comprises at least one compressor (61), a four-way valve (62), an outdoor heat exchanger (63), an expansion device (64), and an indoor heat exchanger (65), to establish a heat pump type refrigerant cycle;
pre-heat supplying means to supply heat of cooling water used to cool the engine (50) and heat of exhaust gas discharged from the engine (50) to the outdoor heat exchanger (63), and thus, to pre-heat air passing around the outdoor heat exchanger (63), the pre-heat supplying means comprising a cooling water heat exchanger (72) to recover the cooling water heat of the engine (50), a first exhaust gas heat exchanger (75) to recover the exhaust gas heat discharged from the engine (50), a pre-heating heat exchanger (74) to pre-heat the outdoor heat exchanger (63), and a heat transfer line (73), which connects the cooling water heat exchanger (72), the first exhaust gas heat exchanger (75), and the pre-heating heat exchanger (74), to guide a heat transfer medium to pass through the exchangers (72), (75), (74); and
refrigerant over-heating means to supply the heat of the exhaust gas discharged from the engine (50) to an inlet of the indoor heat exchanger (65) of the cooling/heating unit (60), the refrigerant over-heating means comprising a heating line (67) branched from a refrigerant line (66) between the indoor heat exchanger (65) and the four-way valve (62), a valve (67v) to change a refrigerant path between the refrigerant line (66) and the heating line (67), and a second exhaust gas heat exchanger (76) arranged at an exhaust conduit (54) of the engine (50), the heating line (67) extending through the second exhaust gas heat exchanger (76) and performing heat exchange with the second exhaust gas heat exchanger (76).
